(19) Europäisches Patentamt
European Patent Office
Office européen des brevets

(11) **EP 3 544 839 B1**

(12) **FASCICULE DE BREVET EUROPEEN**

(45) Date de publication et mention
de la délivrance du brevet:
**24.03.2021 Bulletin 2021/12**

(21) Numéro de dépôt: **17780829.2**

(22) Date de dépôt: **22.09.2017**

(51) Int Cl.:
**B60K 6/547** *(2007.10)*     **B60W 10/11** *(2012.01)*
**B60K 1/02** *(2006.01)*      **B60W 10/06** *(2006.01)*
**B60W 10/08** *(2006.01)*     **B60W 30/19** *(2012.01)*
**B60W 20/40** *(2016.01)*     **B60W 50/00** *(2006.01)*

(86) Numéro de dépôt international:
**PCT/FR2017/052548**

(87) Numéro de publication internationale:
**WO 2018/096228 (31.05.2018 Gazette 2018/22)**

(54) **PROCÉDÉ DE COMMANDE D'UN GROUPE MOTOPROPULSEUR HYBRIDE AUTOMOBILE MUNI D'UNE BOITE DE VITESSES**

VERFAHREN ZUM STEUERN EINES HYBRIDEN KRAFTFAHRZEUGANTRIEBSSTRANGS MIT EINEM GETRIEBE

METHOD FOR CONTROLLING A HYBRID MOTOR VEHICLE POWERTRAIN FITTED WITH A GEARBOX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2016 FR 1661509**

(43) Date de publication de la demande:
**02.10.2019 Bulletin 2019/40**

(73) Titulaires:
• **Renault S.A.S.**
**92100 Boulogne-Billancourt (FR)**
• **Nissan Motor Co., Ltd.**
**Yokohama-shi, Kanagawa 221-0023 (JP)**

(72) Inventeur: **CHANTREL, Cédric**
**94220 Charenton-Le-Pont (FR)**

(74) Mandataire: **Rougemont, Bernard et al**
**Renault s.a.s**
**TCR GRA 2 36 - Sce 00267**
**1, Avenue du Golf**
**78084 Guyancourt Cedex (FR)**

(56) Documents cités:
**EP-A2- 0 953 467     EP-B1- 2 726 757**
**FR-A1- 2 809 352**

EP 3 544 839 B1

**Description**

L'invention a pour domaine technique la commande de boîte de vitesse pour véhicule automobile, et en particulier la commande des actionneurs d'une telle boîte.

Les véhicules automobiles munis d'une boîte de vitesse de type locobox, nécessitent, lors d'un changement de rapport, un transfert de fourniture de couple entres les différents actionneurs de couple avant de pouvoir effectuer le changement de rapport. Il faut alors réaliser une phase de remise de couple pour retrouver la répartition optimale, qui impacte directement le couple à la roue. Tout comportement sous optimal dans la répartition de couple durant cette phase est très mal perçu par le client.

De l'état de la technique antérieure, on connaît les documents suivants.

Le brevet EP2694309 décrit de manière générale les mécanismes de la boîte locobox et son contrôle associé.

Le brevet EP2726757 décrit de manière générale l'architecture électrique de la boîte locobox et son contrôle associé.

Le document FR2809352 divulgue un procédé de commande d'un groupe motopropulseur hybride comprenant deux machines électriques, un moteur à combustion interne et une boîte de vitesses, lors d'un passage d'un mode hybride série à un mode hybride parallèle.

Il existe un besoin pour une commande de boîte de vitesse de type locobox dans un groupe motopropulseur hybride qui permette d'obtenir une remise de couple lors d'un changement de rapport qui soit le moins perceptible possible par l'utilisateur.

L'invention a pour objet un procédé de commande d'un groupe motopropulseur pour véhicule automobile comprenant deux machines électrique, un moteur à combustion interne et une boîte de vitesse. Le procédé comprend les étapes suivantes pour déterminer les consignes de couple du moteur à combustion interne et des machines électriques :

pour chaque machine électrique et pour le moteur à combustion interne, on détermine un différentiel de couple comme la valeur absolue de la différence entre une consigne de couple à l'instant précédent et une consigne de couple cible en fin de remise de couple, lors d'un changement de rapport de la boîte, puis

on détermine, pour chaque machine électrique et pour le moteur à combustion interne, une variable booléenne indiquant l'état de la phase de remise de couple ainsi qu'une variable booléenne indiquant la fin de la phase de remise de couple pour le moteur à combustion interne en fonction d'un premier instant, défini comme l'instant de début de remise de couple, d'un deuxième instant défini comme l'instant de remise de couple du moteur à combustion interne et des différentiels de couple pour chaque machine électrique et pour le moteur à combustion interne,

lorsque l'instant présent est postérieur au premier instant, on détermine que la consigne de couple brute est égale, pour le moteur à combustion interne, à la consigne de couple cible en fin de remise de couple à l'instant précédent, et pour chaque machine électrique, elle est fonction de la consigne de couple à la roue traduisant la volonté conducteur, des estimations du couple réalisé par le moteur à combustion interne et par les machines électriques, des ratios de transmission entre les roues, le moteur à combustion interne et les machines électriques,

pour chaque machine électrique et pour le moteur à combustion interne, on détermine une consigne de couple non saturée égale à la consigne de couple brute saturée par un gradient de couple maximum,

pour chaque machine électrique, on détermine qu'une consigne de couple saturée est égale à la valeur maximale entre le couple minimum réalisable et la valeur minimale parmi la consigne de couple non saturée et le couple maximum réalisable et qu'une la consigne intermédiaire de couple est égale à la consigne de couple saturée, si l'instant présent est antérieur au deuxième instant, et sinon à la consigne de couple cible en fin de remise de couple.

On peut déterminer que, pour le moteur à combustion interne et pour chaque machine électrique, la consigne de couple à l'instant précédent est égale dans le cas d'une première occurrence, à une consigne de couple au début de la remise de couple.

On peut déterminer que la consigne de couple brute est égale pour chaque machine électrique, au rapport d'un terme par le ratio de transmission entre la machine électrique et les roues, le terme étant égal à la consigne de couple à la roue traduisant la volonté conducteur moins le produit de l'estimation du couple réalisé par le moteur à combustion interne par le ratio de transmission entre le moteur à combustion interne et les roues moins le produit de l'estimation du couple réalisé par l'autre machine électrique par le ratio de transmission entre l'autre machine électrique et les roues lorsque l'instant présent est postérieur au premier instant.

Si l'instant présent est égal au premier instant, on peut déterminer que, pour le moteur à combustion interne et pour chaque machine électrique, la consigne de couple brute est égale à la consigne de couple du moteur à combustion interne au début de la remise de couple.

Si l'instant présent est postérieur ou égal au premier instant, on peut déterminer si le différentiel de couple du moteur à combustion interne est inférieur à un seuil de fin de remise de couple du moteur à combustion interne,

si tel est le cas, on peut déterminer qu'une variable booléenne indiquant l'état de la phase de remise de couple sur le moteur à combustion interne prend une première valeur, sinon elle prend une deuxième valeur.

si l'instant présent est postérieur au deuxième instant, et si le différentiel de couple est inférieur à un seuil de fin de remise de couple, on peut déterminer, pour chaque machine électrique, que la variable booléenne indiquant l'état de la phase de remise de couple prend une première valeur, sinon elle prend une deuxième valeur,

si la variable booléenne indiquant l'état de la phase de remise de couple sur le moteur à combustion interne, si la variable booléenne indiquant l'état de la phase de remise de couple sur la première machine électrique et si la variable booléenne indiquant l'état de la phase de remise de couple sur la deuxième machine électrique prennent chacune leur première valeur simultanément, une variable booléenne indiquant la fin de la phase de remise de couple peut prendre une première valeur, sinon elle peut prendre une deuxième valeur.

On peut déterminer si une variable booléenne indiquant le début de la remise de couple prend sa première valeur et si la variable booléenne indiquant la fin de la phase de remise de couple prend sa deuxième valeur. Si tel est le cas, on peut déterminer, pour chaque machine électrique, que la consigne de couple est égale à la consigne intermédiaire de couple saturée par le gradient de couple maximum, et on détermine que la consigne de couple du moteur à combustion interne est égale à la valeur maximale parmi le couple minimum réalisable par le moteur à combustion interne et le minimum parmi la consigne de couple non saturée du moteur à combustion interne et le couple maximum réalisable par le moteur à combustion interne,

si tel n'est pas le cas, on peut déterminer, pour chaque machine électrique et pour le moteur à combustion interne, que la consigne de couple est égale la consigne de couple cible en fin de remise de couple.

Le premier instant peut être l'instant auquel la variable booléenne indiquant le début de la remise de couple prend une valeur associée au début de la remise de couple.

Le deuxième instant peut être l'instant auquel la variable booléenne indiquant l'état de la phase de remise de couple sur le moteur à combustion interne passe de la deuxième valeur à la première valeur.

Pour les machines électriques et le moteur à combustion interne, l'estimation du couple réalisé peut être remplacée par la consigne de couple à l'instant précédent.

D'autres buts, caractéristiques et avantages de l'invention apparaîtront à la lecture de la description suivante, donnée uniquement à titre d'exemple non limitatif.

Le procédé de commande décrit ci-dessous permet de réaliser, de manière optimale et sans impact pour l'utilisateur client, la phase de remise de couple pour un groupe motopropulseur hybride comprenant deux machines électriques, un moteur à combustion interne et une boîte de vitesse de type Locobox.

Les variables d'entrée du procédé de commande sont les suivantes :

$C\_ME1\_sp\_init$ : Consigne de couple de la première machine électrique au début de la remise de couple (en Nm)
$C\_ME2\_sp\_init$ : Consigne de couple de la deuxième machine électrique au début de la remise de couple (en Nm)
$C\_ICE\_sp\_init$ : Consigne de couple du moteur à combustion interne au début de la remise de couple (en Nm)
$C\_ME1\_tgt\_opt$ : Consigne de couple cible de la première machine électrique en fin de remise de couple (en Nm)
$C\_ME2\_tgt\_opt$ : Consigne de couple cible de la deuxième machine électrique en fin de remise de couple (en Nm)
$C\_ICE\_tgt\_opt$ : Consigne de couple cible du moteur à combustion interne en fin de remise de couple (en Nm)
$B\_TqUp\_start$ : Variable booléenne indiquant le début de la remise de couple
$C\_ME1\_esti$ : Estimation du couple réalisé par la première machine électrique (en Nm)
$C\_ME2\_esti$ : Estimation du couple réalisé par la deuxième machine électrique (en Nm)
$C\_ICE\_esti$ : Estimation du couple réalisé par le moteur à combustion interne (en Nm)
$C\_wheel\_sp$ : Consigne de couple à la roue traduisant la volonté conducteur (en Nm)
$ME1\_ratio\_whl$ : Ratio de transmission entre la première machine électrique et les roues.
$ME2\_ratio\_whl$ : Ratio de transmission entre la deuxième machine électrique et les roues.
$ICE\_ratio\_whl$ : Ratio de transmission entre le moteur à combustion interne et les roues.

Ces variables sont considérées disponibles en amont de l'exécution du procédé de commande, soit par la détermination par au moins un capteur, soit par l'estimation sur la base d'au moins une mesure réalisée par au moins un capteur, soit en étant présentes dans une mémoire accessible au procédé de commande.

Les variables de sortie du procédé de commande sont les suivantes :

$C\_ME1\_sp$ : Consigne de couple de la première machine électrique (en Nm)
$C\_ME2\_sp$ : Consigne de couple de la deuxième machine électrique (en Nm)
$C\_ICE\_sp$ : Consigne de couple du moteur à combustion interne (en Nm)

Ces variables sont émises à destination des organes de commande des machines électriques et du moteur à combustion interne, de façon directe ou indirecte.

Les variables de calcul du procédé de commande sont les suivantes :

C_MEI_max : Couple maximum réalisable par la première machine électrique (en Nm)
C_ME2_max : Couple maximum réalisable par la deuxième machine électrique (en Nm)
C_ICE_max : Couple maximum réalisable par le moteur à combustion interne (en Nm)
C_MEI_min : Couple minimum réalisable par la première machine électrique (en Nm)
C_ME2_min : Couple minimum réalisable par la deuxième machine électrique (en Nm)
C_ICE_min : Couple minimum réalisable par le moteur à combustion interne (en Nm)
C_ME1_grad_max : Gradient de couple maximum pour la première machine électrique (en Nm)
C_ME2_grad_max : Gradient de couple maximum pour la deuxième machine électrique (en Nm)
C_ICE_grad_max : Gradient de couple maximum pour le moteur à combustion interne (en Nm)

Le procédé de commande comprend une étape de calcul des différentiels de couple, une étape de supervision de la remise de couple et une étape de calcul des consignes de couple.

Au cours de l'étape de calcul des différentiels de couple, on réalise les sous-étapes suivantes :
On définit le premier instant t0 comme l'instant de début de remise de couple, l'instant auquel la variable booléenne B_TqUp_start(t) indiquant le début de la remise de couple prend une valeur associée au début de la remise de couple.

On détermine la consigne de couple de la première machine électrique C_ME1_sp_prev à l'instant précédent t-dt tel que :

$$C\_ME1\_sp\_prev(t) = C\_ME1\_sp(t\text{-}dt) \qquad (Eq.\ 1)$$

Dans le cas de la première occurrence, on détermine que la consigne de couple de la première machine électrique C_ME1_sp_prev à l'instant précédent est égale à une consigne de couple de la première machine électrique au début de la remise de couple C_ME1_sp_init.

$$C\_ME1\_sp\_prev(T0) = C\_ME1\_sp\_init \qquad (Eq.\ 2)$$

On détermine de manière similaire, la consigne de couple à l'instant précédent de la deuxième machine électrique et du moteur à combustion interne.

Plus précisément, on détermine la consigne de couple de la deuxième machine électrique C_ME2_sp_prev à l'instant précédent t-dt tel que :

$$C\_ME2\_sp\_prev(t) = C\_ME2\_sp(t\text{-}dt) \qquad (Eq.\ 3)$$

Dans le cas de la première occurrence, on détermine que la consigne de couple de la deuxième machine électrique C_ME1_sp_prev à l'instant précédent est égale à une consigne de couple de la deuxième machine électrique au début de la remise de couple C_ME2_sp_init.

$$C\_ME2\_sp\_prev(T0) = C\_ME2\_sp\_init \qquad (Eq.\ 4)$$

De même, on détermine la consigne de couple du moteur à combustion interne C_ICE_sp_prev à l'instant précédent t-dt tel que :

$$C\_ICE\_sp\_prev(t) = C\_ICE\_sp(t\text{-}dt) \qquad (Eq.\ 5)$$

Dans le cas de la première occurrence, on détermine que la consigne de couple du moteur à combustion interne C_ICE_sp_prev à l'instant précédent est égale à une consigne de couple du moteur à combustion interne au début de la remise de couple C_ICE_sp_init.

$$C\_ICE\_sp\_prev(T0) = C\_ICE\_sp\_init \qquad (Eq.\ 6)$$

On détermine le différentiel de couple de la première machine électrique Diff_C_ME1 comme la valeur absolue de la différence entre la consigne de couple de la première machine électrique C_ME1_sp_prev à l'instant précédent et la Consigne de couple cible de la première machine électrique en fin de remise de couple C_ME 1_tgt_opt.

$$\mathrm{Diff\_C\_ME1(t)} = \left| \mathrm{C\_ME1\_sp\_prev(t) - C\_ME1\_tgt\_opt(t)} \right| \quad (\text{Eq. 7})$$

On détermine de manière similaire, le différentiel de couple de la deuxième machine électrique et du moteur à combustion interne.

Plus précisément, on définit le différentiel de couple de la deuxième machine électrique Diff_C_ME2 comme la valeur absolue de la différence entre la consigne de couple de la deuxième machine électrique C_ME2_sp_prev à l'instant précédent et la consigne de couple cible de la deuxième machine électrique en fin de remise de couple C_ME2_tgt_opt.

$$\mathrm{Diff\_C\_ME2(t)} = \left| \mathrm{C\_ME2\_sp\_prev(t) - C\_ME2\_tgt\_opt(t)} \right| \quad (\text{Eq. 8})$$

De même, on définit le différentiel de couple du moteur à combustion interne Diff_C_ICE comme la valeur absolue de la différence entre la consigne de couple du moteur à combustion interne C_ICE_sp_prev à l'instant précédent et la consigne de couple cible du moteur à combustion interne en fin de remise de couple C_ICE_tgt_opt.

$$\mathrm{Diff\_C\_ICE(t)} = \left| \mathrm{C\_ICE\_sp\_prev(t) - C\_ICE\_tgt\_opt(t)} \right| \quad (\text{Eq. 9})$$

Au cours de l'étape de supervision de la remise de couple, on réalise les sous-étapes suivantes :
On rappelle que le premier instant t0 est défini comme l'instant de début de remise de couple, l'instant auquel la variable booléenne B_TqUp_start(t) indiquant le début de la remise de couple prend une valeur associée au début de la remise de couple. On réalise l'étape de supervision à partir du premier instant t0.

On détermine que la variable booléenne B_ICE_TqUp_end indiquant l'état de la phase de remise de couple sur le moteur à combustion interne prend une première valeur lorsque la phase de remise de couple est terminée, c'est-à-dire lorsque l'instant présent est postérieur à l'instant de début de remise de couple t0, et que le différentiel de couple du moteur à combustion interne Diff_C_ICE est inférieur à un seuil de fin de remise de couple du moteur à combustion interne Seuil_ICE_end. Le seuil de fin de remise de couple du moteur à combustion interne Seuil_ICE_end est calibrable entre 0Nm et 15Nm.

Dans les autres cas, la variable booléenne B_ICE_TqUp_end indiquant l'état de la phase de remise de couple sur moteur à combustion interne prend une deuxième valeur.

On définit le deuxième instant t1 comme l'instant auquel la variable booléenne B_ICE_TqUp_end indiquant l'état de la phase de remise de couple sur le moteur à combustion interne passe de la deuxième valeur à la première valeur.

On détermine que la variable booléenne B_ME1_TqUp_end indiquant l'état de la phase de remise de couple sur la première machine électrique prend une première valeur lorsque la phase de remise de couple est terminée, c'est-à-dire lorsque l'instant présent est postérieur au deuxième instant t1 de fin de remise de couple du moteur à combustion interne, et que le différentiel de couple de la première machine électrique Diff_C_ME1 est inférieur à un seuil de fin de remise de couple de la première machine électrique Seuil_ME1_end. Le seuil de fin de remise de couple de la première machine électrique Seuil_ME1_end est calibrable entre 0Nm et 15Nm. Dans les autres cas, la variable booléenne B_ME1_TqUp_end indiquant l'état de la phase de remise de couple sur la première machine électrique prend une deuxième valeur.

On détermine que la variable booléenne B_ME2_TqUp_end indiquant l'état de la phase de remise de couple sur la deuxième machine électrique prend une première valeur lorsque la phase de remise de couple est terminée, c'est-à-dire lorsque l'instant présent est postérieur au deuxième instant t1 de fin de remise de couple du moteur à combustion interne, et que le différentiel de couple de la deuxième machine électrique Diff_C_ME2 est inférieur à un seuil de fin de remise de couple de la deuxième machine électrique Seuil_ME2_end. Le seuil de fin de remise de couple de la deuxième machine électrique Seuil_ME2_end est calibrable entre 0Nm et 15Nm.

Dans les autres cas, la variable booléenne B_ME2_TqUp_end indiquant l'état de la phase de remise de couple sur la deuxième machine électrique prend une deuxième valeur.

On détermine que la variable booléenne B_TqUp_end indiquant la fin de la phase de remise de couple prend une première valeur lorsque la variable booléenne B_ICE_TqUp_end indiquant l'état de la phase de remise de couple sur le moteur à combustion interne, la variable booléenne B_ME1_TqUp_end indiquant l'état de la phase de remise de couple sur la première machine électrique et la variable booléenne B_ME2_TqUp_end indiquant l'état de la phase de remise de couple sur la deuxième machine électrique prennent chacune leur première valeur simultanément.

Au cours de l'étape de calcul des consignes de couple, on réalise les sous-étapes suivantes :
On rappelle que le premier instant t0 est défini comme l'instant de début de remise de couple, l'instant auquel la variable booléenne B_TqUp_start(t) indiquant le début de la remise de couple prend une valeur associée au début de la remise de couple.

On détermine que la consigne de couple brute du moteur à combustion interne C_ICE_sp_raw est égal à la consigne de couple du moteur à combustion interne au début de la remise de couple C_ICE_sp_init lorsque l'instant présent t est égal au premier instant t0. La consigne de couple brute du moteur à combustion interne C_ICE_sp_raw est égal à la consigne de couple cible du moteur à combustion interne en fin de remise de couple C_ICE_tgt_opt à l'instant précédent t-dt lorsque l'instant présent t est postérieur au premier instant t0.

On détermine la consigne de couple non saturée du moteur à combustion interne C_ICE_sp_no_sat égale à la consigne de couple brute du moteur à combustion interne C_ICE_sp_raw saturé par le gradient de couple maximum pour le moteur à combustion interne C_ICE_grad_max.

Lorsque la variable booléenne indiquant le début de la remise de couple B_TqUp_start prend sa première valeur et la variable booléenne B_TqUp_end indiquant la fin de la phase de remise de couple prend sa deuxième valeur, on détermine que la consigne de couple du moteur à combustion interne C_ICE_sp est égale au maximum parmi le couple minimum réalisable par le moteur à combustion interne C_ICE_min et le minimum parmi la consigne de couple non saturée du moteur à combustion interne C_ICE_sp_no_sat et le couple maximum réalisable par le moteur à combustion interne C_ICE_max.

$$C\_ICE\_sp = \max\left(\min\left(C\_ICE\_sp\_no\_sat\left(t\right); C\_ICE\_max\right); C\_ICE\_min\right) \quad (Eq.\ 10)$$

Lorsque la variable booléenne indiquant le début de la remise de couple B_TqUp_start prend sa deuxième valeur et la variable booléenne B_TqUp_end indiquant la fin de la phase de remise de couple prend sa première valeur, on détermine que la consigne de couple du moteur à combustion interne C_ICE_sp est égale à la consigne de couple cible du moteur à combustion interne en fin de remise de couple C_ ICE_tgt_opt

On détermine que la consigne de couple brute de la première machine électrique C_ME1_sp_raw est égale à la consigne de couple de la première machine électrique au début de la remise de couple C_ME1_sp_init lorsque l'instant présent t est égal au premier instant t0. La consigne de couple brute de la première machine électrique C_ME1_sp_raw est égale au rapport d'un terme par le ratio de transmission entre la première machine électrique et les roues ME1_ratio_whl, le terme étant égal à la consigne de couple à la roue traduisant la volonté conducteur C_wheel_sp moins le produit de l'estimation du couple réalisé par le moteur à combustion interne C_ICE_esti(t) par le ratio de transmission entre le moteur à combustion interne et les roues ICE_ratio_whl moins le produit de l'estimation du couple réalisé par la deuxième machine électrique C_ME2_esti par le ratio de transmission entre la deuxième machine électrique et les roues ME2_ratio_whl lorsque l'instant présent t est postérieur au premier instant t0.

$$C\_ME1\_sp\_raw = \cdots$$
$$\frac{\left(C\_wheel\_sp\left(t\right) - \left(C\_ICE\_esti\left(t\right) * ICE\_ratio\_whl\left(t\right)\right) - \left(C\_ME2\_esti\left(t\right) * ME2\_ratio\_whl\left(t\right)\right)\right)}{ME1\_ratio\_whl\left(t\right)} \quad (Eq.\ 11)$$

On détermine que la consigne de couple non saturée de la première machine électrique C_ME1_sp_no_sat est égale à la consigne de couple brute de la première machine électrique C_ME1_sp_raw saturée par un gradient de couple maximum pour la première machine électrique C_ME1_grad_max.

On détermine que la consigne de couple saturée de la première machine électrique C_ME1_sp_sat est égale à la valeur maximale entre le couple minimum réalisable par la première machine électrique C_ME1_min et la valeur minimale parmi la consigne de couple non saturée de la première machine électrique C_ME1_sp_no_sat et le couple maximum réalisable par la première machine électrique.

On détermine que la consigne de couple brute de la deuxième machine électrique C_ME2_sp_raw est égale à la consigne de couple de la deuxième machine électrique au début de la remise de couple C_ME2_sp_init lorsque l'instant présent t est égal au premier instant t0. La consigne de couple brute de la deuxième machine électrique C_ME2_sp_raw est égale au rapport d'un terme par le ratio de transmission entre la deuxième machine électrique et les roues ME2_ratio_whl, le terme étant égal à la consigne de couple à la roue traduisant la volonté conducteur C_wheel_sp moins le produit de l'estimation du couple réalisé par le moteur à combustion interne C_ICE_esti(t) par le ratio de transmission entre le moteur à combustion interne et les roues ICE_ratio_whl moins le produit de l'estimation du couple réalisé par la première machine électrique C_ME1_esti par le ratio de transmission entre la première machine électrique et les roues ME1_ratio_whl lorsque l'instant présent t est postérieur au premier instant t0.

$$C\_ME2\_sp\_raw = \cdots$$
$$\frac{\left(C\_wheel\_sp(t) - \left(C\_ICE\_esti(t) * ICE\_ratio\_whl(t)\right) - \left(C\_ME1\_esti(t) * ME1\_ratio\_whl(t)\right)\right)}{ME2\_ratio\_whl(t)} \quad (Eq.12)$$

On détermine que la consigne de couple non saturée de la deuxième machine électrique C_ME2_sp_no_sat est égale à la consigne de couple brute de la deuxième machine électrique C_ME2_sp_raw saturée par un gradient de couple maximum pour la deuxième machine électrique C_ME2_grad_max.

On détermine que la consigne de couple saturée de la deuxième machine électrique C_ME2_sp_sat est égale à la valeur maximale entre le couple minimum réalisable par la deuxième machine électrique C_ME2_min et la valeur minimale parmi la consigne de couple non saturée de la deuxième machine électrique C_ME2_sp_no_sat et le couple maximum réalisable par la deuxième machine électrique.

On détermine la consigne intermédiaire de couple de la première machine électrique C_ME1_sp_med égale à la consigne de couple saturée de la première machine électrique C_ME1_sp_sat si l'instant présent t est antérieur au deuxième instant tl, égale à la consigne de couple cible de la première machine électrique en fin de remise de couple C_ME1_tgt_opt si l'instant présent t est postérieur ou égal au deuxième instant t1.

On détermine la consigne intermédiaire de couple de la deuxième machine électrique C_ME2_sp_med égale à la consigne de couple saturée de la deuxième machine électrique C_ME2_sp_sat si l'instant présent t est antérieur au deuxième instant tl, égale à la consigne de couple cible de la deuxième machine électrique en fin de remise de couple C_ME2_tgt_opt si t est postérieur ou égal au deuxième instant t1.

On détermine ensuite la consigne de couple de la première machine électrique 1 C_ME1_sp en fonction de la variable booléenne indiquant le début de la remise de couple B_TqUp_start et de la variable booléenne B_TqUp_end indiquant la fin de la phase de remise de couple.

Lorsque la variable booléenne indiquant le début de la remise de couple B_TqUp_start prend sa première valeur et la variable booléenne B_TqUp_end indiquant la fin de la phase de remise de couple prend sa deuxième valeur, on détermine que la consigne de couple de la première machine électrique 1 C_ME1_sp est égale à la consigne intermédiaire de couple de la première machine électrique C_ME1_sp_med saturée par le gradient de couple maximum pour la première machine électrique C_ME1_grad_max.

Lorsque la variable booléenne indiquant le début de la remise de couple B_TqUp_start prend sa deuxième valeur et la variable booléenne B_TqUp_end indiquant la fin de la phase de remise de couple prend sa première valeur, on détermine que la consigne de couple de la première machine électrique 1 C_ME1_sp est égale la consigne de couple cible de la première machine électrique en fin de remise de couple C_ME1_tgt_opt.

Il en va de même pour la deuxième machine électrique.

Ainsi, on détermine ensuite la consigne de couple de la deuxième machine électrique 1 C_ME2_sp en fonction de la variable booléenne indiquant le début de la remise de couple B_TqUp_start et de la variable booléenne B_TqUp_end indiquant la fin de la phase de remise de couple

Lorsque la variable booléenne indiquant le début de la remise de couple B_TqUp_start prend sa première valeur et la variable booléenne B_TqUp_end indiquant la fin de la phase de remise de couple prend sa deuxième valeur, on détermine que la consigne de couple de la deuxième machine électrique 1 C_ME2_sp est égale à la consigne intermédiaire de couple de la deuxième machine électrique C_ME2_sp_med saturée par le gradient de couple maximum pour la deuxième machine électrique C_ME2_grad_max.

Lorsque la variable booléenne indiquant le début de la remise de couple B_TqUp_start prend sa deuxième valeur et la variable booléenne B_TqUp_end indiquant la fin de la phase de remise de couple prend sa première valeur, on détermine que la consigne de couple de la deuxième machine électrique 1 C_ME2_sp est égale la consigne de couple cible de la deuxième machine électrique en fin de remise de couple C_ME2_tgt_opt.

Dans un mode de réalisation alternatif, les occurrences de l'estimation du couple réalisé par la première machine électrique C_ME1_esti sont remplacées par la consigne de couple de la première machine électrique C_ME1_sp_prev à l'instant précédent.

De même, les occurrences de l'estimation du couple réalisé par la deuxième machine électrique C_ME2_esti sont remplacées par la consigne de couple de la deuxième machine électrique C_ME2_sp_prev à l'instant précédent et les occurrences de l'estimation du couple réalisé par le moteur à combustion interne C_ICE_esti sont remplacées par la consigne de couple du moteur à combustion interne C_ICE_sp_prev à l'instant précédent.

**Revendications**

1. Procédé de commande d'un groupe motopropulseur pour véhicule automobile comprenant deux machines électriques, un moteur à combustion interne et une boîte de vitesse, **caractérisé par le fait qu'**il comprend les étapes suivantes pour déterminer les consignes de couple du moteur à combustion interne et des machines électriques :

    - pour chaque machine électrique et pour le moteur à combustion interne, on détermine un différentiel de couple comme la valeur absolue de la différence entre une consigne de couple à l'instant précédent et une consigne de couple cible en fin de remise de couple, lors d'un changement de rapport de la boîte, puis
    - on détermine, pour chaque machine électrique et pour le moteur à combustion interne, une variable booléenne indiquant l'état de la phase de remise de couple ainsi qu'une variable booléenne indiquant la fin de la phase de remise de couple pour le moteur à combustion interne en fonction d'un premier instant, défini comme l'instant de début de remise de couple, d'un deuxième instant défini comme l'instant de remise de couple du moteur à combustion interne et des différentiels de couple pour chaque machine électrique et pour le moteur à combustion interne,
    - lorsque l'instant présent est postérieur au premier instant, on détermine qu'une consigne de couple brute est égale, pour le moteur à combustion interne, à la consigne de couple cible en fin de remise de couple à l'instant précédent, et pour chaque machine électrique, elle est fonction de la consigne de couple à la roue traduisant la volonté conducteur, des estimations du couple réalisé par le moteur à combustion interne et par les machines électriques, des ratios de transmission entre les roues, le moteur à combustion interne et les machines électriques,
    - pour chaque machine électrique et pour le moteur à combustion interne, on détermine une consigne de couple non saturée égale à la consigne de couple brute saturée par un gradient de couple maximum,
    - pour chaque machine électrique, on détermine qu'une consigne de couple saturée est égale à la valeur maximale entre le couple minimum réalisable et la valeur minimale parmi la consigne de couple non saturée et le couple maximum réalisable et qu'une consigne intermédiaire de couple est égale à la consigne de couple saturée, si l'instant présent est antérieur au deuxième instant, et sinon à la consigne de couple cible en fin de remise de couple.

2. Procédé de commande selon la revendication 1, dans lequel, on détermine que, pour le moteur à combustion interne et pour chaque machine électrique, la consigne de couple à l'instant précédent est égale, dans le cas d'une première occurrence, à une consigne de couple au début de la remise de couple.

3. Procédé de commande selon l'une quelconque des revendications précédentes, dans lequel on détermine que la consigne de couple brute est égale pour chaque machine électrique, au rapport d'un terme par le ratio de transmission entre la machine électrique et les roues, le terme étant égal à la consigne de couple à la roue traduisant la volonté conducteur moins le produit de l'estimation du couple réalisé par le moteur à combustion interne par le ratio de transmission entre le moteur à combustion interne et les roues moins le produit de l'estimation du couple réalisé par l'autre machine électrique par le ratio de transmission entre l'autre machine électrique et les roues lorsque l'instant présent est postérieur au premier instant.

4. Procédé de commande selon l'une quelconque des revendications 1 ou 2, dans lequel, si l'instant présent est égal au premier instant, on détermine que, pour le moteur à combustion interne et pour chaque machine électrique, la consigne de couple brute est égale à la consigne de couple du moteur à combustion interne au début de la remise de couple.

5. Procédé de commande selon l'une quelconque des revendications précédentes, dans lequel,
si l'instant présent est postérieur ou égal au premier instant, on détermine si le différentiel de couple du moteur à combustion interne est inférieur à un seuil de fin de remise de couple du moteur à combustion interne,
si tel est le cas, on détermine qu'une variable booléenne indiquant l'état de la phase de remise de couple sur le moteur à combustion interne prend une première valeur, sinon elle prend une deuxième valeur.
si l'instant présent est postérieur au deuxième instant, et si le différentiel de couple est inférieur à un seuil de fin de remise de couple, on détermine, pour chaque machine électrique, que la variable booléenne indiquant l'état de la phase de remise de couple prend une première valeur, sinon elle prend une deuxième valeur,
si la variable booléenne indiquant l'état de la phase de remise de couple sur le moteur à combustion interne, si la variable booléenne indiquant l'état de la phase de remise de couple sur la première machine électrique et si la variable booléenne indiquant l'état de la phase de remise de couple sur la deuxième machine électrique prennent chacune leur première valeur simultanément, une variable booléenne indiquant la fin de la phase de remise de couple prend une première valeur, sinon elle prend une deuxième valeur.

6. Procédé de commande selon la revendication 5, dans lequel on détermine si une variable booléenne indiquant le début de la remise de couple prend sa première valeur et si la variable booléenne indiquant la fin de la phase de remise de couple prend sa deuxième valeur, si tel est le cas, on détermine, pour chaque machine électrique, que la consigne de couple est égale à la consigne intermédiaire de couple saturée par le gradient de couple maximum, et on détermine que la consigne de couple du moteur à combustion interne est égale à la valeur maximale parmi le couple minimum réalisable par le moteur à combustion interne et le minimum parmi la consigne de couple non saturée du moteur à combustion interne et le couple maximum réalisable par le moteur à combustion interne, si tel n'est pas le cas, on détermine, pour chaque machine électrique et pour le moteur à combustion interne, que la consigne de couple est égale la consigne de couple cible en fin de remise de couple.

7. Procédé de commande selon la revendication 6, dans lequel le premier instant est l'instant auquel la variable booléenne indiquant le début de la remise de couple prend une valeur associée au début de la remise de couple.

8. Procédé de commande selon la revendication 5, dans lequel le deuxième instant est l'instant auquel la variable booléenne indiquant l'état de la phase de remise de couple sur le moteur à combustion interne passe de la deuxième valeur à la première valeur.

9. Procédé de commande selon l'une quelconque des revendications précédentes, dans lequel, pour les machines électriques et le moteur à combustion interne, l'estimation du couple réalisé est remplacée par la consigne de couple à l'instant précédent.

**Patentansprüche**

1. Verfahren zur Steuerung eines Antriebsstranges für ein Kraftfahrzeug, welcher zwei elektrische Maschinen, eine Brennkraftmaschine und ein Getriebe umfasst, **dadurch gekennzeichnet, dass** es die folgenden Schritte umfasst, um die Drehmomentsollwerte der Brennkraftmaschine und der elektrischen Maschinen zu bestimmen:

   - für jede elektrische Maschine und für die Brennkraftmaschine wird ein Differenzdrehmoment als der absolute Betrag der Differenz zwischen einem Drehmomentsollwert zum vorhergehenden Zeitpunkt und einem Ziel-Drehmomentsollwert am Ende der Drehmomentwiederherstellung bei einem Gangwechsel des Getriebes bestimmt, danach
   - werden für jede elektrische Maschine und für die Brennkraftmaschine eine Boolesche Variable, die den Zustand der Phase der Drehmomentwiederherstellung angibt, sowie eine Boolesche Variable, die das Ende der Phase der Drehmomentwiederherstellung für die Brennkraftmaschine angibt, in Abhängigkeit von einem ersten Zeitpunkt, der als der Zeitpunkt des Beginns der Drehmomentwiederherstellung definiert ist, von einem zweiten Zeitpunkt, der als der Zeitpunkt der Drehmomentwiederherstellung der Brennkraftmaschine definiert ist, und von den Differenzdrehmomenten für jede elektrische Maschine und für die Brennkraftmaschine bestimmt,
   - wenn der gegenwärtige Zeitpunkt nach dem ersten Zeitpunkt liegt, wird bestimmt, dass ein Brutto-Drehmomentsollwert für die Brennkraftmaschine gleich dem Ziel-Drehmomentsollwert am Ende der Drehmomentwiederherstellung zum vorhergehenden Zeitpunkt ist, und dass er für jede elektrische Maschine abhängig ist von dem Drehmomentsollwert am Rad, der den Wunsch des Fahrers ausdrückt, von den Schätzungen des von der Brennkraftmaschine und von den elektrischen Maschinen erzeugten Drehmoments, von den Übersetzungsverhältnissen zwischen den Rädern, der Brennkraftmaschine und den elektrischen Maschinen,
   - für jede elektrische Maschine und für die Brennkraftmaschine wird ein ungesättigter Drehmomentsollwert bestimmt, der gleich dem Brutto-Drehmomentsollwert ist, der durch einen maximalen Drehmomentgradienten gesättigt ist,
   - für jede elektrische Maschine wird bestimmt, dass ein gesättigter Drehmomentsollwert gleich dem maximalen Wert von dem realisierbaren minimalen Drehmoment und dem minimalen Wert aus dem ungesättigten Drehmomentsollwert und dem realisierbaren maximalen Drehmoment ist, und dass ein Zwischen-Drehmomentsollwert gleich dem gesättigten Drehmomentsollwert ist, falls der gegenwärtige Zeitpunkt vor dem zweiten Zeitpunkt liegt, und andernfalls gleich dem Ziel-Drehmomentsollwert am Ende der Drehmomentwiederherstellung.

2. Verfahren zur Steuerung nach Anspruch 1, wobei bestimmt wird, dass für die Brennkraftmaschine und für jede elektrische Maschine der Drehmomentsollwert zum vorhergehenden Zeitpunkt im Falle eines ersten Auftretens gleich einem Drehmomentsollwert zu Beginn der Drehmomentwiederherstellung ist.

3. Verfahren zur Steuerung nach einem der vorhergehenden Ansprüche, wobei bestimmt wird, dass der Brutto-Drehmomentsollwert für jede elektrische Maschine gleich dem Verhältnis eines Terms zum Übersetzungsverhältnis zwischen der elektrischen Maschine und den Rädern ist, wobei der Term gleich dem Drehmomentsollwert am Rad, der den Wunsch des Fahrers ausdrückt, abzüglich des Produkts der Schätzung des von der Brennkraftmaschine erzeugten Drehmoments mit dem Übersetzungsverhältnis zwischen der Brennkraftmaschine und den Rädern abzüglich des Produkts der Schätzung des von der anderen elektrischen Maschine erzeugten Drehmoments mit dem Übersetzungsverhältnis zwischen der anderen elektrischen Maschine und den Rädern ist, wenn der vorhergehende Zeitpunkt nach dem ersten Zeitpunkt liegt.

4. Verfahren zur Steuerung nach einem der Ansprüche 1 oder 2, wobei, falls der vorhergehende Zeitpunkt gleich dem ersten Zeitpunkt ist, bestimmt wird, dass für die Brennkraftmaschine und für jede elektrische Maschine der Brutto-Drehmomentsollwert gleich dem Drehmomentsollwert der Brennkraftmaschine zu Beginn der Drehmomentwiederherstellung ist.

5. Verfahren zur Steuerung nach einem der vorhergehenden Ansprüche, wobei,
falls der gegenwärtige Zeitpunkt nach dem ersten Zeitpunkt liegt oder gleich diesem ist, bestimmt wird, ob das Differenzdrehmoment der Brennkraftmaschine kleiner als ein Schwellenwert des Endes der Drehmomentwiederherstellung der Brennkraftmaschine ist,
wenn dies der Fall ist, bestimmt wird, dass eine Boolesche Variable, die den Zustand der Phase der Drehmomentwiederherstellung an der Brennkraftmaschine angibt, einen ersten Wert annimmt, und sie andernfalls einen zweiten Wert annimmt,
falls der gegenwärtige Zeitpunkt nach dem zweiten Zeitpunkt liegt und falls das Differenzdrehmoment kleiner als ein Schwellenwert des Endes der Drehmomentwiederherstellung ist, bestimmt wird, für jede elektrische Maschine, dass die Boolesche Variable, die den Zustand der Phase der Drehmomentwiederherstellung angibt, einen ersten Wert annimmt, und sie andernfalls einen zweiten Wert annimmt,
falls die Boolesche Variable, die den Zustand der Phase der Drehmomentwiederherstellung an der Brennkraftmaschine angibt, falls die Boolesche Variable, die den Zustand der Phase der Drehmomentwiederherstellung an der ersten elektrischen Maschine angibt, und falls die Boolesche Variable, die den Zustand der Phase der Drehmomentwiederherstellung an der zweiten elektrischen Maschine angibt, gleichzeitig jeweils ihren ersten Wert annehmen, eine Boolesche Variable, die das Ende der Phase der Drehmomentwiederherstellung angibt, einen ersten Wert annimmt, und sie andernfalls einen zweiten Wert annimmt.

6. Verfahren zur Steuerung nach Anspruch 5, wobei bestimmt wird, ob eine Boolesche Variable, die den Beginn der Drehmomentwiederherstellung angibt, ihren ersten Wert annimmt, und ob die Boolesche Variable, die das Ende der Phase der Drehmomentwiederherstellung angibt, ihren zweiten Wert annimmt, und wenn dies der Fall ist, bestimmt wird, für jede elektrische Maschine, dass der Drehmomentsollwert gleich dem Zwischen-Drehmomentsollwert ist, der durch den maximalen Drehmomentgradienten gesättigt ist, und bestimmt wird, dass der Drehmomentsollwert der Brennkraftmaschine gleich dem maximalen Wert aus dem von der Brennkraftmaschine realisierbaren minimalen Drehmoment und dem Minimum aus dem ungesättigten Drehmomentsollwert der Brennkraftmaschine und dem von der Brennkraftmaschine realisierbaren maximalen Drehmoment ist,
und wenn dies nicht der Fall ist, bestimmt wird, für jede elektrische Maschine und für die Brennkraftmaschine, dass der Drehmomentsollwert gleich dem Ziel-Drehmomentsollwert am Ende der Drehmomentwiederherstellung ist.

7. Verfahren zur Steuerung nach Anspruch 6, wobei der erste Zeitpunkt der Zeitpunkt ist, zu dem die Boolesche Variable, die den Beginn der Drehmomentwiederherstellung angibt, einen Wert annimmt, der dem Beginn der Drehmomentwiederherstellung zugeordnet ist.

8. Verfahren zur Steuerung nach Anspruch 5, wobei der zweite Zeitpunkt der Zeitpunkt ist, zu dem die Boolesche Variable, die den Zustand der Phase der Drehmomentwiederherstellung an der Brennkraftmaschine angibt, von zweiten Wert zum ersten Wert übergeht.

9. Verfahren zur Steuerung nach einem der vorhergehenden Ansprüche, wobei für die elektrischen Maschinen und die Brennkraftmaschine die Schätzung des erzeugten Drehmoments durch den Drehmomentsollwert zum vorhergehenden Zeitpunkt ersetzt wird.

**Claims**

1.  Method for controlling a power train for a motor vehicle comprising two electrical machines, an internal combustion engine and a gearbox, **characterized in that** it comprises the following steps for determining the torque setpoints of the internal combustion engine and of the electrical machines:

    - for each electrical machine and for the internal combustion engine, a torque differential is determined as the absolute value of the difference between a setpoint at the preceding instant and a target torque setpoint at the end of torque distribution, upon a change of gear, then
    - for each electrical machine and for the internal combustion engine, a boolean variable is determined that indicates the state of the torque distribution phase and a boolean variable indicating the end of the torque distribution phase of the internal combustion engine according to a first instant, defined as the instant of start of torque distribution, of a second instant defined as the instant of torque distribution of the internal combustion engine and of the torque differentials for each electrical machine and for the internal combustion engine,
    - when the present instant is after the first instant, a determination is made that a raw torque setpoint is equal, for the internal combustion engine, to the target torque setpoint at the end of torque distribution at the preceding instant, and, for each electrical machine, it is a function of the torque setpoint on the wheel reflecting the will of the driver, estimations of the torque produced by the internal combustion engine and by the electrical machines, transmission ratios between the wheels, the internal combustion engine and the electrical machines,
    - for each electrical machine and for the internal combustion engine, an unsaturated torque setpoint is determined that is equal to the raw torque setpoint saturated by a maximum torque gradient,
    - for each electrical machine, a determination is made that a saturated torque setpoint is equal to the maximum value between the minimum torque that can be produced and the minimum value out of the unsaturated torque setpoint and the maximum torque that can be produced and that an intermediate torque setpoint is equal to the saturated torque setpoint, if the present instant is prior to the second instant, and, otherwise, to the target torque setpoint at the end of torque distribution.

2.  Control method according to Claim 1, wherein, a determination is made that, for the internal combustion engine and for each electrical machine, the torque setpoint at the preceding instant is equal, in the case of a first occurrence, to a torque setpoint at the start of torque distribution.

3.  Control method according to either one of the preceding claims, wherein a determination is made that the raw torque setpoint is equal, for each electrical machine, to the ratio of a term by the transmission ratio between the electrical machine and the wheels, the term being equal to the torque setpoint at the wheel reflecting the driver's will minus the product of the estimation of the torque produced by the internal combustion engine by the transmission ratio between the internal combustion engine and the wheels minus the product of the estimation of the torque produced by the other electrical machine by the transmission ratio between the other electrical machine and the wheels when the present instant is after the first instant.

4.  Control method according to either one of Claims 1 and 2, wherein, if the present instant is equal to the first instant, a determination is made that, for the internal combustion engine and for each electrical machine, the raw torque setpoint is equal to the torque setpoint of the internal combustion engine at the start of torque distribution.

5.  Control method according to any one of the preceding claims, wherein,
    if the present instant is after or equal to the first instant, a determination is made as to whether the torque differential of the internal combustion engine is lower than a threshold of end of torque distribution of the internal combustion engine,
    if such is the case, a determination is made that a boolean variable indicating the state of the torque distribution phase on the internal combustion engine takes a first value, otherwise it takes a second value, if the present instant is after the second instant, and if the torque differential is lower than a threshold of end of torque distribution, a determination is made, for each electrical machine, that the boolean variable indicating the state of the torque distribution phase takes a first value, otherwise it takes a second value, if the boolean variable indicating the state of the torque distribution phase on the internal combustion engine, if the boolean variable indicating the state of the torque distribution phase on the first electrical machine and if the boolean variable indicating the state of the torque distribution phase on the second electrical machine each take their first value simultaneously, a boolean variable indicating the end of the torque distribution phase takes a first value, otherwise it takes a second value.

6.  Control method according to Claim 5, wherein a determination is made as to whether a boolean variable indicating the start of torque distribution takes its first value and whether the boolean variable indicating the end of the torque distribution phase takes its second value, if such is the case, a determination is made, for each electrical machine, that the torque setpoint is equal to the intermediate torque setpoint saturated by the maximum torque gradient, and a determination is made that the torque setpoint of the internal combustion engine is equal to the maximum value out of the minimum torque that can be produced by the internal combustion engine and the minimum out of the unsaturated torque setpoint of the internal combustion engine and the maximum torque that can be produced by the internal combustion engine,

if such is not the case, a determination is made, for each electrical machine and for the internal combustion engine, that the torque setpoint is equal to the target torque setpoint at the end of torque distribution.

7. Control method according to Claim 6, wherein the first instant is the instant at which the boolean variable indicating the start of torque distribution takes a value associated with the start of torque distribution.

8. Control method according to Claim 5, wherein the second instant is the instant at which the boolean variable indicating the state of the torque distribution phase on the internal combustion engine passes from the second value to the first value.

9. Control method according to any one of the preceding claims, wherein, for the electrical machines and the internal combustion engine, the estimation of the torque produced is replaced by the torque setpoint at the preceding instant.

**EP 3 544 839 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2694309 A
- EP 2726757 A
- FR 2809352